# EUROPÄISCHE PATENTANMELDUNG

(11) **EP 0 523 821 A2**
(43) Veröffentlichungstag der Anmeldung: **20.01.1993**
(21) Anmeldenummer: 92250180.4
(22) Anmeldetag: 09.07.1992
(51) Int. Cl.: B01D 33/04, B01D 33/056, B01D 33/46, B01D 33/82, B01D 25/127, B01D 25/32

(54) **Verwendung eines mikrogelochten Metallbandes als Filtermittel**

(30) Priorität: 15.07.1991 DE 4123746
(71) Anmelder: MANNESMANN Aktiengesellschaft, D-40027 Düsseldorf (DE)
(72) Erfinder: Effertz, Rainer, W-4000 Düsseldorf (DE)
(74) Vertreter: Presting, Hans-Joachim, Dipl.-Ing.

(57) **Zusammenfassung**

Die Erfindung betrifft die Verwendung eines als Siedruckmaske bekannten galvanisch oder durch Ätzung hergestellten mikrogelochten Metallbandes mit einer Bandstärke von 50 bis 150 Mikron und einem Porendurchmesser von 4 bis 200 Mikron als Filtermittel zur Feinstfiltration in Filteranlagen zum Reinigen von Kühlschmierstoffen.

## Beschreibung

Die Erfindung betrifft die Verwendung eines als Siebdruckmaske bekannten galvanisch oder durch Ätzung hergestellten mikrogelochten Metallbandes in Filteranlagen zum Reinigen von Kühlschmierstoffen.

In Filteranlagen, die in Kühlschmiersystemen zum Reinigen von Kühlschmierstoffen eingesetzt werden, ist es bekannt und üblich, das Filtermittel in Form von Flitervliesen oder Anschwemm-Medien wie Kieselgur und Bleicherde oder dergleichen einzusetzen, wobei als Träger für die Filtermittel gelochte oder geflochtene Metallbänder bzw. Kerzen eingesetzt werden. Es ist auch schon vorgeschlagen worden, Kunststoffendlosbänder zu verwenden, die sich jedoch wegen ihrer geringen Standzeit und Beständigkeit für viele Filtrate nicht eignen.

Durch die deutsche Offenlegungsschrift 33 06 362 ist es auch bekannt geworden, in einem pneumatischen Druck-Band-Filter zur Entwässerung von Feinkohle ein Filterband einzusetzen, welches als gelochtes Blechband oder Stahl-Gewebeband ausgebildet ist. Zur Feinfiltration wird diesem Filterband zusätzlich ein Vliesband aufgelegt. Der Einsatz des gelochten Blechbandes als Filtermittel ist auf solche Filtrate beschränkt, bei denen die Größe der Feststoffanteile Abmessungen aufweisen, wie sie bei Feinkohle zu erwarten sind.

Die Verwendung von Filtermitteln in Form von Faservliesen oder Anschwemmstoffen ist aufwendig, nicht nur hinsichtlich der Materialkosten, sondern auch der Entsorgung der Anschwemmstoffe und Vliese, so daß es angestrebt wird, den Einsatz und die Menge dieser Filtermittel zu reduzieren. Im Idealfall ist anzustreben, auf zusätzliche Filtermittel vollkommen zu verzichten. Dies hat sich die Erfindung zur Aufgabe gemacht hat.

In der Druckindustrie ist zum Siebdrucken ein Produkt bekannt geworden, welches aus einem vorzugsweise galvanisch hergestellten Metallband besteht, das mit gleichmäßig über das Band verteilten Löchern versehen ist, die einen Durchmesser zwischen 1 und 200 Mikron aufweisen. Diese Löcher sind aufgrund des ihnen eigenen Herstellungsverfahrens, bezogen auf die Dicke des Bandes konisch verlaufend; die Übergänge zu benachbarten Löchern sind abgerundet und verlaufen sanft. Die Dicke der Bänder ist bis zu 100 Mikron problemlos herstellbar, so daß ausreichende Festigkeitswerte erzielbar sind. Als Metall kommmt beispielsweise Nickel infrage (Firmenprospekt der Firma Stork, Himesh, the non-woven screen printing plate for hi-tech printing applications, DG 1137).

Die Erkenntnis der vorliegenden Erfindung besteht nun darin, dieses als Siebdruckmaske bekannte mikrogelochte Metallband in besonders vorteilhafter Weise als Filtermittel zur Feinstfiltration in Filteranlagen zum Reinigen von Kühlschmierstoffen einzusetzen. Die mit diesem mikrogelochten Metallband erzielbaren Vorteile sind insbesondere in der hohen mechanischen und chemischen Beständigkeit sowie der guten Temperaturbeständigkeit zu sehen. Das Material ist sehr leicht zu reinigen. Dabei kommt der konische Verlauf der Mikrolöcher dem Reinigungsvorgang zu Gute, wobei das Band vorzugsweise so eingesetzt wird, daß sich die Öffnungen in Durchflußrichtung erweitern und somit eine selbstreinigende Wirkung gegeben ist. Die ansonsten glatte Oberfläche des Bandes gestattet universelle Einsatzmöglichkeiten ohne zusätzliche Filtervliese und erlaubt aufgrund der guten Reinigungsmöglichkeit sowohl kontinuierliche wie auch diskontinuierliche Fahrweise des Filterbandes. Durch den Wegfall von Vliesen verringern sich die Entsorgungskosten bei langer Verfügbarkeit des Filterbandes.

Als eine günstige Verwendung des mikrogelochten Metallbandes ist vorgeschlagen, dieses als umlaufendes Filterband in einem Bandfilter, vorzugsweise Unterdruckbandfilter einzusetzen. In einer günstigen Ausgestaltung dieses Vorschlages ist vorgesehen, daß das umlaufende Filterband auf einer zur Laufrichtung des Filterbandes gemuldeten Stützkonstruktion aufliegend geführt ist, wobei die Randbereiche des Filterbandes ungelocht ausgeführt sind. Das neuartige Filterband ist prinzipiell dem Faservlies herkömmlicher Unterdruckfilter entsprechend geführt. wobei die Abdichtung zur Unterkammer, die das gereinigte Medium aufnimmt, beispielsweise über Kunststoff-Dichtleisten auf der ungelochten Randzone des Bandes erfolgt. Auch bei dieser Anwendung kann das Filterband sowohl kontinuierlich der jeweiligen Verschmutzung angepaßt, als auch ohne Unterbrechung der Filtration ausgetragen werden.

In einer Ausgestaltung des Vorschlages ist vorgesehen, daß im Bereich der Oberseite des Filterbandes eine dasselbe auf der Stützkonstruktion führende Rollenkette vorgesehen ist, welche mit Austragewinkeln für den Filterkuchen versehen ist. Diese Rollenkette soll das Filterband im Bereich der Umlenkungen auf vorgesehene Dichtleisten pressen und weiterhin verhindern, daß der Filterkuchen beim Austragen auf der Schräge abrutscht.

Neben der Verwendung als Filtermittel wird in einer weiteren Verwendung des mikrogelochten Metallbandes vorgeschlagen, dieses als Trägermedium für die Anschwemmschicht in Anschwemmfiltern einzusetzen. Bei Anschwemmfiltern werden bekanntlich Faservliese oder andere textile Materialien als Trägermedium für eine Anschwemmschicht aus Kieselgur und Bleicherde verwendet, wobei die Trägermedien ihrerseits auf Stützkonstruktionen, beispielsweise in Form von Filterkerzen oder Lochblechen aufliegen. Diese Trägermedien werden nach dem Vorschlag der Erfindung entbehrlich, weil das mikrogelochte Metallband des erfindungsgemäßen Vorschlages selbst als Trägermedium für die Anschwemmschicht dienen kann. Dies weil die Lochdurchmesser des mikrogelochten Bandes so fein zu gestalten sind, daß sie das Anschwemm-Mittel nicht hindurchlassen.

Vorzugsweise dient das mikrogelochte Metallband als Trägerband für Kieselgur oder Bleicherde in Plattenanschwemmfiltern, bei denen das Band in bekannter Weise zwischen jeweils zwei benachbarten Platten hindurchbewegbar ist. Die bevorzugt in der Aluminiumindustrie eingesetzten Plattenanschwemmfilter benutzen bislang ausschließlich ein Faservlies als Trägermedium für die Anschwemmschicht, welches nach Erreichen eines vorgegebenen Differenzdruckes, hervorgerufen durch den Schmutzkuchenaufbau zusammen mit der verschmutzten Kieselgurschicht aus dem Filterplattenstapel herausgezogen und entsorgt wird.

In einer Ausgestaltung des Vorschlages der Erfindung ist vorgesehen, daß die Abtrennung des Filterkuchens mittels Abstreifern und/oder Umlenkrollen oberhalb einer Abfördereinrichtung außerhalb der Platten erfolgt.

In einer anderen Anwendungsform der Erfindung ist vorgesehen, das mikrogelochte Metallband in Form von Filterkerzen in Anschwemmfiltern mit Trockenaustrag zu verwenden. Auch in diesem Filtertyp läßt sich das mikrogelochte Metallband als Ersatz von textilen Filtermitteln einsetzen und ist bei hoher Standzeit als ideales Trägermedium für die Anschwemmschicht anzusehen.

Selbstverständlich kann in einer weiteren Verwendung das mikrogelochte Metallband auch als zylindrisch geformte Filterkerze in Filtern eingesetzt werden, die ohne Anschwemm-Mittel arbeiten. Auch dort ergeben sich die gleichen Vorteile wie vorstehend beschrieben.

Besonders günstig ist es, wenn nach einem anderen erfinderischen Merkmal vorgesehen ist, zum Reinigen des Filtermittels und/oder Trägermediums Dampfstrahleinrichtungen und/oder Spülvorrichtungen mit chemischen Medien zu verwenden. Das besondere Material des mikrogelochten Metallbandes erlaubt den Einsatz auch von Reinigungsmitteln mit hohen Temperaturen und hohem Druck sowie chemischen Medien, die bekannte Vliese oder Kunststoffbänder zerstören würden.

Dabei können besonders die beim Kaltwalzen von Stahl eingesetzten metastabilien Emulsionen vom Filtermittel entfernt werden, die bekanntlich infolge ihrer schnellen Entmischung Filtervlies oder Filterpapiere verstopfen und von dort kaum zu entfernen sind. Durch die Einsatzmöglichkeit hoher Temperaturen beim Abtragen oder Abblasen des erfindungsgemäßen mikrogelochten Metallbandes lassen sich derartige Emulsionen leicht entfernen, wobei auch chemische Medien zur Anwendung kommen können.

In zwei Ausführungsbeispielen wird die Erfindung nachfolgend anhand zweier Filtertypen beschrieben.
Figur 1 zeigt einen Unterdruckbandfilter mit einem als Filtermittel dienendem umlaufenden Filterband und
Figur 2 das mikrogelochte Metallband als Trägermedium in einem Plattenanschwemmfilter.

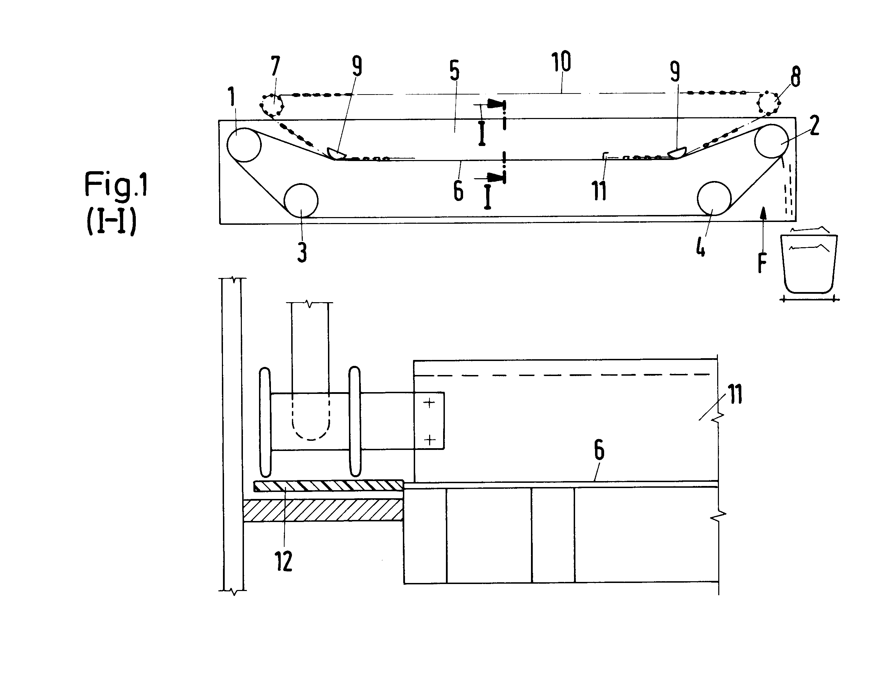

In Figur 1 ist mit F der Unterdruckbandfilter bezeichnet, der in seiner wesentlichen Konstruktion einem herkömmlichen Filter dieser Bauart entspricht. Das erfinderisch verwendete mikrogelochte Metallband wird um die Umlenkrollen 1 bis 4 geführt und liegt im Bereich der Filteroberkammer 5 auf einer - nicht dargestellten - gemuldeten Stützkonstruktion 6 auf. Um die Auflage des mikrogelochten Metallbandes auf dieser Stützkonstruktion zu gewährleisten ist oberhalb des mikrogelochten Metallbandes in der Oberkammer des Filters F eine Rollenkette um Umlenkrollen 7, 8 geführt, die bei 9 der Form der Mulde nachgeführt ist. Die Rollenkette 10 ist, wie das unterhalb der Zeichnungsdarstellung gezeigte Schnittbild darstellt, seitlich der wirksamen Oberfläche des mikrogelochten Metallbandes geführt und in Abständen mit Austragewinkeln 11 versehen, die über die glatte Oberfläche des mikrogelochten Metallbandes streifen und den Filterkuchen auch über die Schräge austragen. Wie in der Schnittdarstellung zu erkennen, ist das mikrogelochte Metallband im Randbereich 12 ungelocht, im vorliegenden Fall durch eine Kunststoffbeschichtung gedichtet. Das mikrogelochte Metallband wird als Filtermittel, d. h. ohne zusätzliche Faservliese oder Papiere eingesetzt.

Ein wesentlicher Vorteil dieser Konzeption gegenüber bekannten Lösungen ist, daß der Filtrationsprozeß durch die kontinuierliche Abdichtung zur Unterdruckkammer beim Einführen des gereinigten Bandes (Regeneration) nicht unterbrochen werden muß.

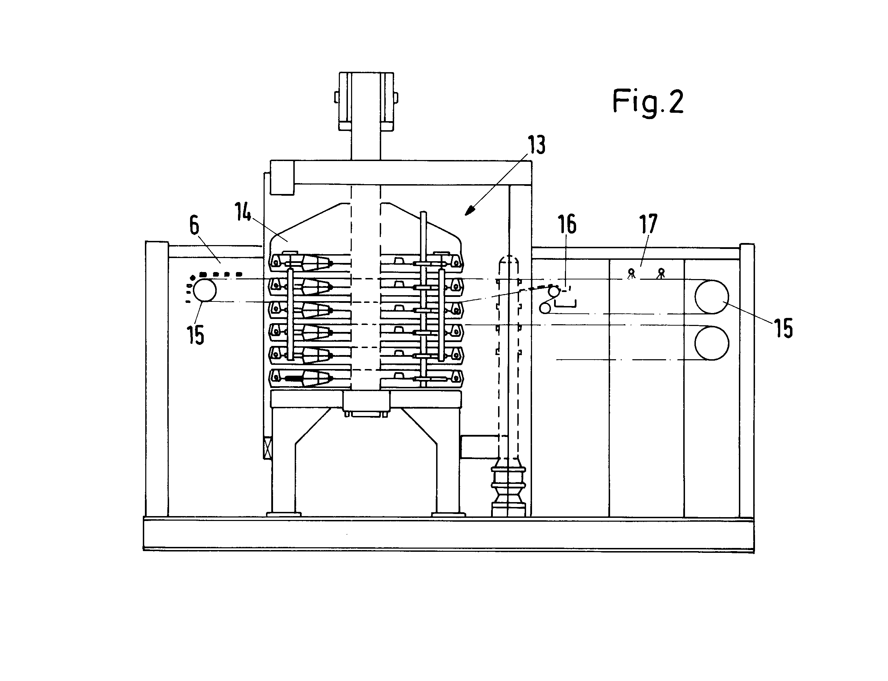

In Figur 2 ist schematisch ein Plattenanschwemmfilter dargestellt, der in seiner Gesamtheit mit 13 beziffert ist. Der Plattenanschwemmfilter besteht aus einem Filterplattenstapel 14 mit mehreren übereinander angeordneten Filterplatten. Letztere bestehen aus jeweils einem Rahmen, wobei jeweils zwischen zwei benachbarten Filterplatten ein mikrogelochtes Metallband als Trägerband für eine Anschwemmschicht aus Kieselgur und Bleicherde geführt ist. Beim Erreichen eines vorgegebenen Differenzdruckes, hervorgerufen durch den Schmutzkuchenaufbau wird das mikrogelochte Metallband nach Öffnen der Zusammenhaltekraft der einzelnen Filterplatten zusammen mit dem verschmutzten Filterkuchen ausgetragen, wobei das mikrogelochte Metallband vorzugsweise um Umlenkrollen 15 geführt ist, die ein Abbrechen des Filterkuchens bewirken. Ggfs. können Querfördereinrichtungen 16 vorgesehen sein, die den Filterkuchen abtransportieren.

Mit Hilfe einer Reinigungsvorrichtung 17 im Verlauf des außerhalb der Filterplatten geführten Bandes kann letzteres von Filterkuchenrückständen gereinigt werden, wobei die anhand des Unterdruckfilters beschriebenen Vorteile der Reinigung des mikrogelochten Metallbandes hier ebenfalls zur Anwendung kommen.

Das mikrogelochte Metallband kann endlos über ein S-Rollen-System geführt sein; denn es ist problemlos möglich, das mikrogelochte Metallband beispielsweise durch Kleben endlos zu machen.

Die Verwendung es aus der Druckindustrie als Siebdruckmaske bekannten Materials ist überraschend, die mechanischen und funktionellen Vorteile sind gegenüber herkömmlichen Filtermitteln erheblich und bereichern den Stand der Technik in großem Maße.

## Patentansprüche

1. Verwendung eines als Siebdruckmaske bekannten galvanisch oder durch Ätzung hergestellten mikrogelochten Metallbandes mit einer Bandstärke von 50 bis 150 Mikron und einem Porendurchmesser von 4 bis 200 Mikron als Filtermittel zur Feinstfiltration in Filteranlagen zum Reinigen von Kühlschmierstoffen.

2. Verwendung des mikrogelochten Metallbandes nach Anspruch 1 als umlaufendes Filterband in einem Filter, vorzugsweise Unterdruckbandfilter.

3. Verwendung des mikrogelochten Metallbandes nach Anspruch 2 in einem Unterdruckfilter, dadurch gekennzeichnet,
daß das umlaufende Filterband auf einer zur Laufrichtung des Filterbandes gemuldeten Stützkonstruktion aufliegend geführt und der Randbereich des Filterbandes ungelocht ausgeführt ist.

4. Verwendung des mikrogelochten Metallbandes nach Anspruch 3 in einem Unterdruckfilter
dadurch gekennzeichnet,
daß im Bereich der Oberseite des Filterbandes eine dasselbe auf der Stützkonstruktion führende Rollenkette vorgesehen ist, welche mit Austragewinkeln für den Filterkuchen versehen ist.

5. Verwendung eines als Siebdruckmaske bekannten galvanisch oder durch Ätzung hergestellten mikrogelochten Metallbandes mit einer Bandstärke von 50 bis 150 Mikron und einem Porendurchmesser von 4 bis 200 Mikron als Trägermedium für die Anschwemmschicht in Anschwemmfiltern.

6. Verwendung eines mikrogelochten Metallbandes nach Anspruch 5 als Trägerband für Kieselgur und/oder Bleicherde in Plattenanschwemmfiltern, bei denen das Band zwischen jeweils zwei benachbarten Platten hindurchbewegbar ist.

7. Verwendung eines mikrogelochten Metallbandes als Trägerband in Plattenanschwemmfiltern nach Anspruch 6,
dadurch gekennzeichnet,
daß die Abtrennung des Filterkuchens mittels Abstreifern und/oder Umlenkrollen oberhalb einer Abfördereinrichtung erfolgt.

8. Verwendung eines mikrogelochten Metallbandes nach Anspruch 5 in Form von Filterkerzen in Anschwemmfiltern mit Trockenaustrag.

9. Verwendung eines mikrogelochten Metallbandes nach Anspruch 1 als zylindrisch geformte Filterkerze.
